# EUROPÄISCHE PATENTSCHRIFT

(11) **EP 2 912 737 B1**
(45) Veröffentlichungstag und Bekanntmachung des Hinweises auf die Patenterteilung: **28.02.2018**
(21) Anmeldenummer: 13766012.2
(22) Anmeldetag: 19.09.2013
(51) Int. Cl.: H01R 4/58, H02G 13/00, H01R 4/66

(54) **EINRICHTUNG ZUM KONTAKTIEREN EINER FELDSTEUERSCHICHT EINER ISOLIERTEN ABLEITUNG IM ÄUSSEREN BLITZSCHUTZ**
DEVICE FOR MAKING CONTACT WITH A FIELD CONTROL LAYER OF AN INSULATED DOWN CONDUCTOR IN EXTERNAL LIGHTNING PROTECTION
DISPOSITIF POUR LA MISE EN CONTACT D'UNE COUCHE À COMMANDE DE CHAMP D'UN CONDUCTEUR DE DESCENTE ISOLÉ DANS LA PROTECTION EXTÉRIEURE CONTRE LA FOUDRE

(30) Priorität: 26.10.2012 DE 102012021588; 07.01.2013 DE 102013000194
(43) Veröffentlichungstag der Anmeldung: 02.09.2015
(73) Patentinhaber: Dehn + Söhne GmbH + Co. KG, 92318 Neumarkt/Opf. (DE)
(72) Erfinder: GAVIC, Marianna, 92318 Neumarkt (DE); LANG, Johanna, 92364 Deining (DE); SEGER, Siegfried, 92364 Deining (DE); SCHÖLL, Helmut, 90602 Seligenporten (DE); ROTHER, Claudia, 92318 Neumarkt (DE)
(74) Vertreter: Kruspig, Volkmar
(86) Internationale Anmeldenummer: PCT/EP2013/069467
(87) Internationale Veröffentlichungsnummer: WO 2014/063869

(56) Entgegenhaltungen:
- DE-A1- 1 515 889
- DE-A1- 10 228 665
- GB-A- 1 221 651
- JP-A- 2008 152 927
- NL-A- 7 307 298
- US-A- 4 056 679

## Beschreibung

Die Erfindung betrifft eine Einrichtung zum Kontaktieren einer Feldsteuerschicht einer isolierten Ableitung im äußeren Blitzschutz, wobei die isolierte Ableitung mindestens über einen Längenabschnitt im Inneren eines Stützkörpers oder Stützrohrs, von diesem beabstandet, geführt ist, weiterhin mit einem leitfähigen Anschlusselement, welches einerseits mit der Feldsteuerschicht sowie andererseits mit einem Potentialausgleich verbunden ist und sich das Anschlusselement im Abstandsraum zwischen der isolierten Ableitung und dem Inneren des Stützkörpers oder des Stützrohrs befindet oder in diesen Abstandsraum einbringbar ist, gemäß Patentanspruch 1.

Es ist bekannt, im äußeren Blitzschutz isolierte Ableitungen im Endverschlussbereich entlang oder im Inneren eines Stützrohrs zu verlegen. Zur Unterdrückung von Gleitentladungen auf der Oberfläche von isolierten Ableitungen ist es notwendig, dass der halbleitende Mantel der Ableitung an den nicht blitzstrombehafteten Potentialausgleich angebunden wird. Dies erfolgt durch Elemente, die direkt auf die Leitung aufgebracht und an den Potentialausgleich angeschlossen werden. Der räumliche Abstand des Potentialausgleichsanschlusses der isolierten Ableitung zum eigentlichen Anschlusselement ist auf die elektrische Leitfähigkeit des halbleitenden Mantels der isolierten Ableitung und dem äquivalenten Trennungsabstand des Blitzschutzsystems abgestimmt. Als isolierte Ableitungen kommen insbesondere sogenannte HVI-Leitungen (HVI: eingetragene Marke der DEHN +SÖHNE GmbH + Co. KG) zum Einsatz. Beim Einsatz einer HVI-Leitung besteht die Gefahr, dass hohe Impulsspannungen ohne zusätzliche Maßnahmen Überschläge an Isolierstoffoberflächen verursachen. Um einen sogenannten Gleitüberschlag zu vermeiden, ist die HVI-Leitung mit einem äußeren halbleitenden Mantel ausgestattet, der es ermöglicht, hohe Blitzimpulsspannungen gegen ein Bezugspotential zu steuern. Funktionsbedingt wird dazu im Bereich des Endverschlusses eine Verbindung zwischen dem äußeren halbleitenden Material und dem Potentialausgleich des Gebäudes geschaffen.

Bei der gattungsbildenden Ausführungsform der Einrichtung zum Kontaktieren einer Feldsteuerschicht einer isolierten Ableitung besteht der auf die Feldsteuerschicht aufzubringende Potentialanschluss aus zwei halbschalenförmigen Teilen, die von beiden Seiten auf die Oberfläche der Leitung gedrückt und dann in ein Halterohr geschoben werden. Anschließend erfolgt eine elektrische Kontaktierung mittels Schraubkontakt hin zu einer außen liegenden metallischen Hülse, die wiederum mit einem Potentialausgleichsanschluss in Verbindung steht. Hinsichtlich des vorerwähnten Standes der Technik sei verwiesen auf www.obo-bettermann.com/download/montage/cbs/ iscon_systemanleitung_120615_de.pdf

Die eingangs erwähnten Blitzstromableiteinrichtungen auf der Basis isolierter Ableitungen sind bekannt z.B. aus der DE 102 28 665 B4 oder der DE 102 33 528 B4. Es wird diesbezüglich ein elektrischer Leiter verwendet, der in eine Isolationsumhüllung eingebettet ist, die wiederum eine leitfähige Ummantelung aufweist, wobei im Anschlussabschnitt des elektrischen Leiters mit der Fangeinrichtung eine Anordnung zur Feldsteuerung zum Zweck des Verhinderns von Gleitentladungen und zur Erhöhung der Impulsspannungsfestigkeit vorgesehen ist. Weiterhin ist die Blitzstromableiteinrichtung an einen nicht blitzstrombehafteten Potentialausgleich angebunden. Zum Stand der Technik gehören auch DE1515889 und GB1221651. Die DE 10 2005 041 167 A1 zeigt eine Blitzstromableitvorrichtung, die aus einer Fangeinrichtung besteht, welche über einen elektrischen Leiter mit einer Erdungsanlage verbunden ist. Der elektrische Leiter ist von einer Isolierung umgeben. Die Isolierung besteht aus einer Schicht aus einem Material, welches ein nichtlineares elektrisches Verhalten aufweist.

Am der Fangeinrichtung zugewandten Endbereich der Isolierung und der diese umgebenden Schicht ist eine Anschlusskappe installiert, die die Fangeinrichtung, den elektrischen Leiter und die umgebende Schicht miteinander elektrisch leitend verbindet. Der Halter ist z.B. aus Metall gefertigt.

Bei den vorbekannten Ausführungsformen des Anbindens der isolierten Ableitung an einen nicht blitzstrombehafteten Potentialausgleich insbesondere bei der Ausführungsform eines Anschlusselements, das in den Abstandsraum zwischen isolierter Ableitung und einem vorhandenen umgebenden Stützkörper einzubringen ist, wird auf mehrteilige Elemente zurückgegriffen, die sehr sorgfältig montiert werden müssen. Vorhandene Toleranzen können von den vorbekannten Anschlusselementen nicht ausgeglichen werden, so dass fraglich ist, ob unter allen Betriebsumständen, d.h. unter Beachtung der Alterung oder von Witterungseinflüssen immer eine ausreichende Kontaktsicherheit vorliegt. Bei einer Relativbewegung bekannter Anschlusselemente zur isolierten Ableitung besteht darüber hinaus die Gefahr, dass die relativ dünne äußere halbleitende Schicht mechanisch beschädigt wird u.a. mit der Folge störender Entladungen in diesem gestörten Bereich.

Wenn, wie beim Stand der Technik möglich, die Anschlusselemente relativ fest im Stützkörper fixiert sind, ist eine gegebenenfalls notwendig werdende Demontage und Wiedermontage nicht oder nur unter erschwerten Bedingungen möglich.

Aus dem Vorgenannten ist es daher Aufgabe der Erfindung, eine weiterentwickelte Einrichtung zum Kontaktieren einer Feldsteuerschicht einer isolierten Ableitung im äußeren Blitzschutz anzugeben, welche zum einen eine einfache Montage und Demontage ermöglicht und die sicherstellt, dass die zu kontaktierende Feldsteuerschicht bei der Montage keinen Beschädigungen unterliegt. Weiterhin soll der Montagevorgang unter Rückgriff auf die zu schaffende Einrichtung schnell und quasi intuitiv realisierbar sein.

Die Lösung der Aufgabe der Erfindung erfolgt durch eine Einrichtung gemäß der Merkmalskombination nach Patentanspruch 1, wobei die Unteransprüche mindestens zweckmäßige Ausgestaltungen und Weiterbildungen beinhalten.

Es wird demnach von einer Einrichtung zum Kontaktieren einer Feldsteuerschicht einer isolierten Ableitung, z.B. einer HVI-Leitung im äußeren Blitzschutz ausgegangen, wobei die isolierte Ableitung mindestens über einen Längenabschnitt im Inneren eines Stützkörpers oder einer Stützrohranordnung, von diesem beabstandet, geführt ist.

Weiterhin ist mindestens ein leitfähiges Anschlusselement vorhanden, welches einerseits mit der Feldsteuerschicht sowie andererseits mit einem Potentialausgleich verbunden ist. Das Anschlusselement ist in den Abstandsraum zwischen der isolierten Ableitung und dem Inneren des Stützkörpers oder des Stützrohrs einbringbar bzw. ist dort angeordnet.

Erfindungsgemäß ist bezüglich des Standes der Technik das Anschlusselement einstückig ausgebildet und weist bei einer bevorzugten Ausführungsform mehrere, unter mechanischer Vorspannung oder Federkraft stehende Arme oder Finger auf.

Diese Arme oder Finger kommen an der Oberfläche der Feldsteuerschicht zur Anlage und kontaktieren diese sicher und langzeitstabil.

Die Arme oder Finger des Anschlusselements sind derart ausgebildet, dass die isolierte Ableitung im Inneren des Stützkörpers oder des Stützrohrs quasi zentriert geführt wird. Mögliche Bewegungen aufgrund von außen einwirkender mechanischer Kräfte (Windlast) oder bedingt durch thermische Ausdehnung können aufgrund der gezielt eingesetzten Federeigenschaften ausgeglichen werden, ohne dass eine Beschädigung der Oberfläche, insbesondere der isolierten Ableitung, eintritt.

Weiterhin ist erfindungsgemäß eine Steckhülse vorgesehen, deren erstes Ende den Stützkörper oder das Stützrohr und deren zweites Ende ein Befestigungsrohr, ein Stützbein oder dergleichen Mittel aufnimmt. Der Stützkörper oder das Stützrohr ist dabei nicht leitend, das Befestigungsrohr oder das Stützbein bzw. die sonstigen Befestigungsmittel, die mastartig ausgebildet sein können, sowie die Steckhülse leitend ausgebildet.

Bei einer ersten Ausführungsform der Erfindung besitzt das Anschlusselement eine Vielzahl von spinnenbeinartigen Federarmen, welche von einem gedachten Mittelpunkt ausgehend radial verlaufen und sich in Längsrichtung des Anschlusselements erstrecken.

Konkretisierend besitzt ein jeweils erstes Ende der Federarme einen im Wesentlichen doppelbogen- oder S-förmigen Verlauf, wobei ein jeweils erster Bogenabschnitt bei einer Variante der Erfindung mit der Innenseite des Stützkörpers oder Stützrohrs in Anlage kommt und bei eingeschobener isolierter Ableitung ein jeweils zweiter Bogenabschnitt mit der Feldsteuerschicht der isolierten Ableitung in Anlage bzw. in Kontakt gelangt. Bei einer alternativen Variante liegt der erste Bogenabschnitt nicht an der Innenseite des Stützkörpers an. Beim beiden Varianten besteht die Möglichkeit, im konkaven Bereich des zweiten Bogenabschnitts eine Formfeder, eine zu einem Ring geschlossene Wurmfeder oder einen elastischen Ring oder dergleichen Mittel anzuordnen, um für einen sicheren Kontakt zur Feldsteuerschicht zu sorgen.

Ausgestaltend erstreckt sich bei dieser Ausführungsform ein jeweils zweites Ende der Federarme im Wesentlichen geradlinig in Längsrichtung. Dieses geradlinige Ende gelangt mit einem Abschnitt in Anlage mit dem Stützkörper oder dem Stützrohr. Dabei kann der geradlinige Verlauf zunächst quasi asymptotisch sich der Innenoberfläche des Stützrohrs oder Stützkörpers nähern, um dann über einen Längsabschnitt vollständig mit der Oberfläche des Stützkörpers oder Stützrohrs in Kontakt zu treten.

Bei einer weiteren bevorzugten Ausgestaltung läuft das jeweilige zweite Ende der Federarme oder mindestens eines Teils der Federarme in einer Abwinklung aus, welche in Kontakt mit der vorerwähnten Steckhülse bringbar ist.

Die Montage dieser Ausführungsform des Anschlusselements kann dabei wie folgt vonstatten gehen.

Das Anschlusselement, ausgebildet mit einer Vielzahl von spinnenbeinartigen Federarmen, wird in ein Ende eines bevorzugt eingesetzten Stützrohrs eingeschoben. Die Abwinklungen an den jeweiligen Federarmen kommen dabei mit dem stirnseitigen Ende des Stützrohrs in Anschlag.

Im Anschluss wird die Stützhülse, deren Innendurchmesser auf den Außendurchmesser des Stützrohrs angepasst ist, auf das Stützrohr aufgeschoben. Ein an der Steckhülse vorhandener Anschlag, der sich zur Innenseite der Steckhülse erstreckt, kommt in Anlage mit der Abwinklung der jeweiligen zweiten Enden der Federarme, so dass eine elektrische Verbindung hergestellt wird und in an sich bekannter Weise die Steckhülse an einen nicht blitzstrombehafteten Potentialausgleich angebunden werden kann.

Es kann dann in diese Anordnung das Kabel eingeschoben werden, weiches durch die Federarme aufgenommen, geführt und kontaktiert wird. Durch die besondere Ausbildung der Federarme mit bogenförmigem Verlauf ist eine Beschädigung der Oberfläche der Feldsteuerschicht der isolierten Ableitung bzw. des entsprechenden Kabels ausgeschlossen.

Bei einer zweiten Ausführungsform der Erfindung kann die Steckhülse selbst im Bereich ihres ersten Endes mehrere umfangsseitig angeordnete Ausnehmungen oder Bohrungen zur Aufnahme von in das Innere hineinragenden federbelasteten Kontaktstiften oder Kontaktfingern besitzen. Die Federbelastung ist hierbei so zu verstehen, dass beim Einschieben der isolierten Ableitung in das Innere der Stützhülse zunächst die Kontaktstifte oder Kontaktfinger zurückgleiten, so dass das Einschieben der Ableitung behinderungsfrei erfolgt. Die Federkraft ist dabei jedoch so hoch, dass die Kontaktflächen der Kontaktfinger oder Kontaktstifte einen ausreichenden elektrischen Kontakt zur Feldsteuerschicht der isolierten Ableitung gewährleisten. Zum Erzeugen der Vorspannkraft können bei dieser Ausführungsform Schraubenfedern zum Einsatz kommen, die in eine Kapsel eingebracht sind, welche einen Kontaktfinger mit bogenförmigem Verlauf bildet. In an sich bekannter Weise besteht dann die Möglichkeit, z.B. durch Gewindestifte eine Kraft auf die jeweilige Feder aufzubringen, um selbige vorzuspannen, so dass eine geeignete Andruckkraft des entsprechenden Kontakts wählbar ist.

Bei einer Weiterbildung der Erfindung besteht die Möglichkeit, dass die Steckhülse im Bereich ihres ersten Endes außenseitig Mittel zum mechanischen Befestigen weiterer isolierter Ableitungen und/oder von Potentialanschlüssen aufweist. Es kann bei dieser Realisierungsform also die Möglichkeit geschaffen werden, um ein quasi zentrales Stützrohr mit innenliegender isolierter Ableitung und am oberen Ende vorgesehener Fangstange mehrere weitere isolierte Ableitungen mit Anschlusskappe und Fangstange anzuordnen, um eine Aufteilung des Blitzstoßstroms im Blitzfall sicherzustellen.

Die Erfindung soll nachstehend anhand eines Ausführungsbeispiels sowie unter Zuhilfenahme von Figuren näher erläutert werden.

Hierbei zeigen:
- Fig.: 1 eine Draufsicht auf die erfindungsgemäße Einrichtung, umfassend ein Stützrohr sowie Steckhülse mit im Inneren befindlicher isolierter Ableitung und einem Anschlusselement, welches eine Vielzahl von spinnenbeinartigen Federarmen besitzt, sowie eine Längsschnittdarstellung der Einrichtung mit erkennbarer Zentrierfunktion für die aufgenommene isolierte Ableitung;

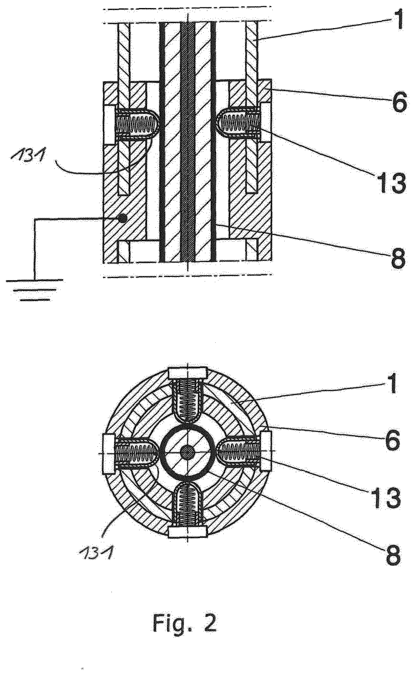

- Fig. 2: eine Querschnitt- sowie eine Längsschnittdarstellung einer zweiten Ausführungsform des Anschlusselements, wobei die Steckhülse im Bereich ihres ersten Endes mehrere umfangsseitig anordnete Ausnehmungen oder Bohrungen zur Aufnahme von in das Innere hineinragenden federbelasteten Kontaktstiften oder Kontaktfingern besitzt;

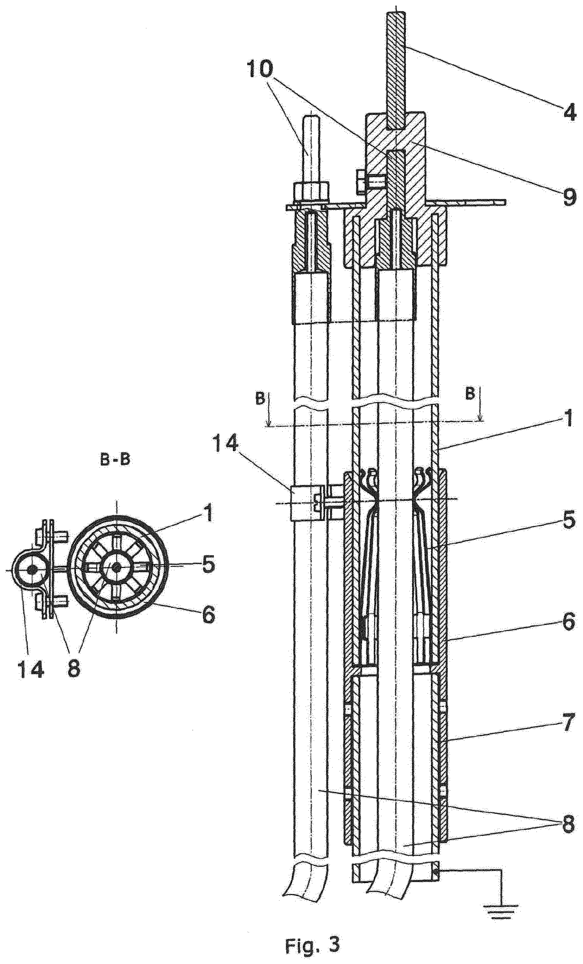

- Fig. 3: einen Längsschnitt sowie eine Querschnittdarstellung längs der Linie B-B einer Anordnung zum äußeren Blitzschutz mit der erfindungsgemäßen Einrichtung sowie Fangstangen in einer Ausführungsform mit einer isolierten Ableitung innerhalb eines Stützrohrs und mindestens einer weiteren isolierten Ableitung nebst Fangstange außerhalb der Stützrohranordnung;

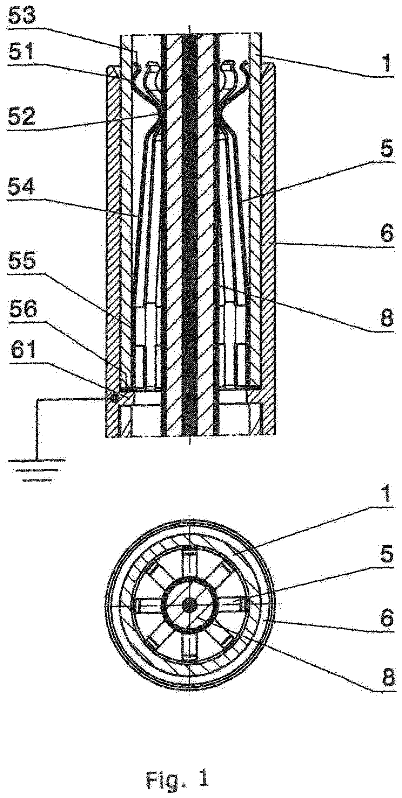

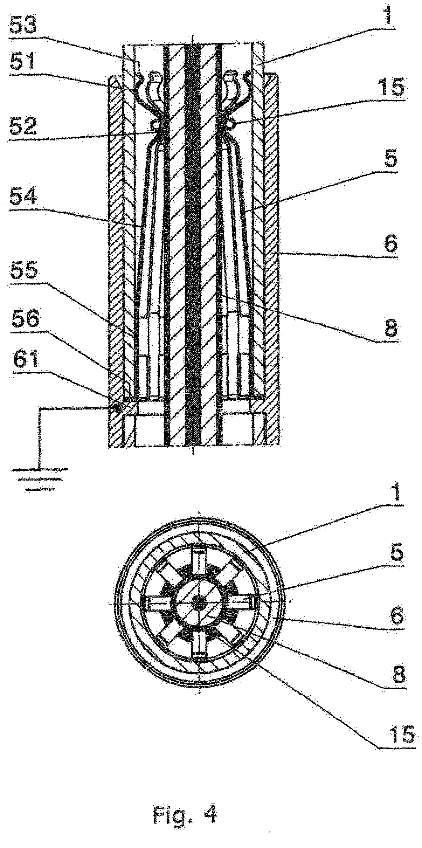

- Fig. 4: eine Darstellung ähnlich derjenigen nach Fig. 1, wobei zusätzlich im konkaven Bereich des zweiten Bogenabschnitts eine Formfeder, eine zu einem Ring geschlossene Wurmfeder oder ein elastischer Ring angeordnet ist, um für einen sicheren Kontakt zur Feldsteuerschicht zu sorgen, und

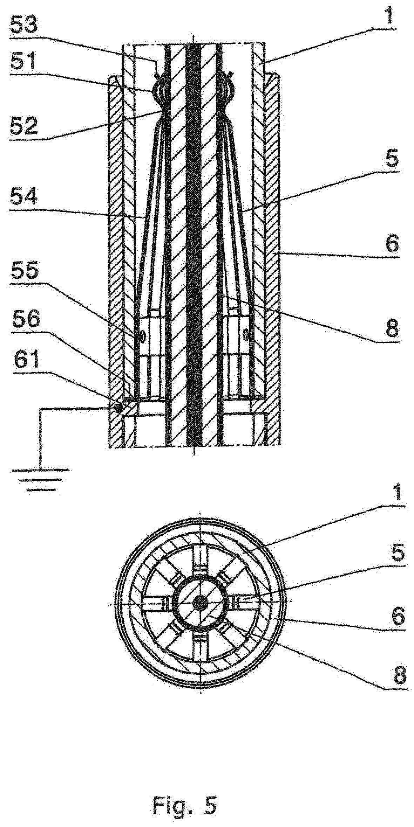

- Fig. 5: eine Quer- sowie Längsschnittdarstellung einer Variante der Erfindung, wobei der erste Bogenabschnitt des ersten Endes der Federarme nicht an der Innenseite des Stützkörpers anliegt.

Bei der in den Schnittdarstellungen nach Fig. 3 gezeigten Lösung für den äußeren Blitzschutz unter Verwendung isolierter Ableitungen ist ersichtlich, dass die Möglichkeit besteht, die isolierte Ableitung 8 innerhalb eines nicht leitenden Stützrohrs 1 zu verlegen, wobei im oberen Bereich des Stützrohrs 1 ein Kontaktkopfstück 9 mit Fangstange oder Fangspitze 4 ausgebildet ist. Mit dem Bezugszeichen 10 ist ein Anschlusskopf für die isolierte Ableitung 8 dargestellt.

Der Blitzstrom wird im Blitzfall über die Fangspitze 4 in das Kontaktkopfstück 9 geleitet und geht somit in den Anschlusskopf 10 der isolierten Ableitung 8 über und wird gleichmäßig auf die in der Fig. 3 gezeigten zwei isolierten Ableitungen verteilt, die den Blitzstrom sicher zum Erdpotential des zu schützenden Objekts ableiten.

Der Anschluss des Potentialausgleichs bezüglich der Feldsteuerschicht der isolierten Ableitung 8 erfolgt, wie in der Fig. 3 dargestellt, zunächst in bekannter Weise mit Hilfe einer Kontaktstelle 14, die mit einer Steckhülse 6 in Verbindung steht.

Die Steckhülse 6 wiederum nimmt ein geerdetes metallisches Stützrohr 7 auf. Das Stützrohr kann z.B. das zentrale Rohr eines Dreibeins zur Ausbildung einer äußeren Blitzschutzanlage auf einem Flachdach sein.

Das erfindungsgemäße Anschlusselement 5 gemäß der Darstellung nach Fig. 3 besteht aus einer Vielzahl von spinnenbeinartigen Federarmen, welche von einem gedachten Mittelpunkt ausgehend radial verlaufen und sich in Längsrichtung des Anschlusselements erstrecken.

Einzelheiten des Aufbaus des Anschlusselements 5 seien anhand der Fig. 1 , 4 und 5 beschrieben.

Zunächst ist das Anschlusselement 5 bevorzugt einstückig z.B. aus einem Federmaterial oder Edelstahl gefertigt.

Die Federarme des Anschlusselements 5 weisen jeweils ein erstes Ende und jeweils ein zweites Ende auf.

Die jeweils ersten Enden der Federarme 5 besitzen einen im Wesentlichen doppelbogen- oder S-förmigen Verlauf, wobei ein erster Bogenabschnitt 51 mit der Innenseite des in der Fig. 1 gezeigten Stützrohrs 1 in Anlage gelangt.

Bei eingeschobener isolierter Ableitung 8 gelangt ein jeweils zweiter Bogenabschnitt 52 mit seinem konvexen Bereich mit der Feldsteuerschicht der isolierten Ableitung 8 in Kontakt. Eine bogenförmige Ausnehmung 53 bildet eine Einführschräge für die isolierte Ableitung 8 und verhindert eine Beschädigung der Oberfläche derselben.

Ein jeweils zweites Ende der Federarme des Anschlusselements 5 erstreckt sich im Abschnitt 54 im Wesentlichen geradlinig in Längsrichtung, wobei der Abschnitt 55 in Anlage mit der Innenseite des Stützrohrs 1 kommt.

Das jeweilige zweite Ende der Federarme läuft in eine Abwinklung 56 aus, welche in mechanischen und elektrischen Kontakt mit der Steckhülse 6, insbesondere einem dort angebrachten Bund 61 gelangt, der zur Innenseite, d.h. zur isolierten Ableitung 8, hin gerichtet ist. Bei der Fig.2, bei welcher es sich um eine beispielgebende Erklärung der Erfindung handelt, ist wiederum eine Steckhülse 6 vorhanden, die ein unteres Ende des Stützrohrs 1 aufnimmt. Weiterhin sind in die Wandung der Steckhülse 6 mindestens eine, bevorzugt mehrere umfangsmäßig verteilte Ausnehmungen eingebracht, welche federgelagerte Kontaktfinger 13 aufnehmen.

Die Vorspannung der in den Figuren erkennbaren Schraubenfedern kann mit Hilfe einer eingebrachten Druckschraube vorgegeben und eingestellt werden.

Die bogenförmigen Kontaktkappen 131 des Anschlusselements bzw. der Kontaktfinger 13 sichern ein beschädigungsfreies Einschieben der isolierten Ableitung 8 und sorgen für eine ausreichende Langzeitstabilität der notwendigen elektrischen Potentialausgleichsverbindung.

Wie insbesondere die Querschnittsdarstellung nach Fig. 2 deutlich werden lässt, ist durch die Anordnung von z.B. um 90° winkelversetzten Anschlusselementen in Form von Kontaktfingern 13 auch die gewünschte Zentrierwirkung bezüglich der Position der isolierten Ableitung 8 innerhalb der Stützhülse 6 bzw. des Stützrohrs 1 gewährleistet.

Die vorstehend erläuterte Einrichtung ermöglicht eine leichte Montage oder Demontage, wobei die Anbindung der Anschlusselemente an den nicht blitzstrombehafteten Potentialausgleich durch eine elektrische Verbindung über die Hülse 6 zum geerdeten Stützrohr aus Metall 7 vorgenommen werden kann.

Die Ausbildung des innenliegenden Potentialausgleichsanschlusses mit dem erfindungsgemäßen Anschlusselement ist langzeitstabil, flexibel und übernimmt bei Verwendung einer Federlamellenform, wie aus den Fig. 1, 4 oder 5 ersichtlich, auch eine Abdichtfunktion.

Zur Vermeidung von Potentialunterschieden zwischen innen geführter und außen verlegter Ableitung 8 werden die Kontaktanschlussköpfe 10 gemäß Fig. 3 und die entsprechenden Anschlüsse 5 und 14 auf einheitlicher Höhe zueinander montiert bzw. verlegt.

Die Fig. 4 zeigt eine Weiterbildung der Ausführungsform nach Fig. 1, bei der ergänzend im Bereich des zweiten Bogenabschnitts 52, insbesondere in dem dortigen konkaven Abschnitt, eine Formfeder 15, insbesondere in Form einer zu einem geschlossenen Ring ausgebildeten Wurmfeder eingesetzt ist, die der Verbesserung der Kontaktierung mit der Feldsteuerschicht der isolierten Ableitung 8 dient.

Bei der Ausführungsform gemäß den Darstellung nach Fig. 5 ist der erste Bogenabschnitt 51 so ausgeformt, dass dieser nicht mit der Innenseite des in Fig. 5 gezeigten Stützrohrs 1 in Anlage gelangt. Beschädigungen der isolierten Ableitung 8 beim Einführen in die erfindungsgemäße Einrichtung, insbesondere bei einem verringerten Stützrohrdurchmesser 1 sind ausgeschlossen. Erforderlichenfalls besteht auch bei der Ausführungsvariante nach Fig. 5 die Möglichkeit der Anordnung einer Form- oder Wurmfeder 15 analog der Darstellung gemäß Fig. 4.

## Patentansprüche

1. Einrichtung zum Kontaktieren einer Feldsteuerschicht einer isolierten Ableitung (8) im äußeren Blitzschutz, wobei die isolierte Ableitung (8) mindestens über einen Längenabschnitt im Inneren eines Stützkörpers oder eines Stützrohrs (1), von diesem beabstandet, geführt ist, weiterhin mit einem leitfähigen Anschlusselement (5), welches einerseits mit der Feldsteuerschicht sowie andererseits mit einem Potentialausgleich verbunden ist und sich das Anschlusselement (5) im Abstandsraum zwischen der isolierten Ableitung (8) und dem Inneren des Stützkörpers oder des Stützrohrs (1) befindet
**dadurch gekennzeichnet, dass**
das Anschlusselement (5) in diesen Abstandsraum einbringbar ist, einstückig ausgebildet ist und mehrere, unter mechanischer Vorspannung oder Federkraft stehende Arme oder Finger aufweist, welche an der Oberfläche der Feldsteuerschicht der isolierten Ableitung (8) zur Anlage kommen, weiterhin eine Steckhülse (6) vorgesehen ist, deren erstes Ende den Stützkörper oder das Stützrohr (1) und deren zweites Ende ein Befestigungsrohr (7), Stützbein oder dergleichen Mittel aufnimmt, wobei der Stützkörper oder das Stützrohr (1) nicht leitend, Befestigungsrohr oder Stützbein (7) sowie die Steckhülse leitend ausgebildet sind,
das Anschlusselement (5) eine Vielzahl von spinnenbeinartigen Federarmen besitzt, welche von einem Mittelpunkt ausgehend radial verlaufen und sich in Längsrichtung des Anschlusselements (5) erstrecken,
jeweils ein erstes Ende der Federarme einen im Wesentlichen doppelbogen- oder S-förmigen Verlauf besitzt, wobei ein jeweils erster Bogenabschnitt (51) vorhanden ist und bei eingeschobener isolierter Ableitung (8) ein jeweils zweiter Bogenabschnitt (52) mit der Feldsteuerschicht in Anlage gelangt, sich jeweils ein zweites Ende der Federarme im Wesentlichen geradlinig in Längsrichtung erstreckt und mit einem Abschnitt (55) in Anlage mit dem Stützkörper oder Stützrohr (1) gelangt und das jeweils zweite Ende (54) der Federarme in einer Abwinklung (56) ausläuft, welche in Kontakt mit der Steckhülse (6; 61) bringbar ist.

2. Einrichtung nach Anspruch 1,
**dadurch gekennzeichnet, dass**
die Arme oder Finger derart ausgebildet sind, dass die isolierte Ableitung (8) im Inneren des Stützkörpers oder Stützrohrs (1) zentriert geführt ist.

3. Einrichtung nach einem der vorangegangenen Ansprüche,
**dadurch gekennzeichnet, dass**
die Steckhülse (6) im Bereich ihres ersten Endes außenseitig Mittel (14) zum mechanischen Befestigen weiterer isolierter Ableitungen (8) und/oder von Potentialanschlüssen aufweist.

4. Einrichtung nach Anspruch 1,
**dadurch gekennzeichnet, dass**
der zweite Bogenabschnitt (52) einen konvexen Bereich besitzt, der an der Feldsteuerschicht anliegt, und einen konkaven Bereich aufweist, welcher eine Formfeder, eine Wurmfeder oder einen elastischen Ring (15) aufnimmt.

## Claims

1. Device for contacting a field control layer of an insulated arrester (8) in the external lightning protection, wherein the insulated arrester (8) is guided at least over a length portion within a support body or a support tube (1) to be spaced apart therefrom, furthermore having a conductive connection element (5) connected to the field control layer, on the one hand, and to a potential equalization means, on the other, and the connection element (5) being situated in the spacing between the insulated arrester (8) and the interior of the support body or the support tube (1),
**characterized in that**
the connection element (5) may be inserted into said spacing, is formed in one piece, and comprises a plurality of arms or fingers that are under mechanical preload or spring force, which come to rest against the surface of the field control layer of the insulated arrester (8), furthermore, a plug sleeve (6) is provided, the first end thereof receiving the support body or the support tube (1), and the second end thereof receiving a fixing tube (7), a support leg or similar means, wherein the support body or the support tube (1) is formed to be non-conducting, the fixing tube or support leg (7) and the plug sleeve are formed to be conducting,
the connection element (5) has a plurality of spider leg-like spring arms running radially from a center point and extending in the longitudinal direction of the connection element (5),
in each case, a first end of the spring arms has a substantially double arch-shaped or S-shaped course, wherein a respective first arch section (51) is present and, when the insulated arrester (8) is inserted, a second arch section (52) comes into contact with the field control layer, a respective second end of the spring arms extends substantially rectilinear in the longitudinal direction and comes into contact with the support body or support tube (1) by a section (55), and the respective second end (54) of the spring arms ends in an angular deflection which may be brought into contact with the plug sleeve (6; 61).

2. Device according to claim 1,
**characterized in that**
the arms or fingers are formed such that the insulated arrester (8) is guided to be centered in the interior of the support body or support tube (1).

3. Device according to anyone of the preceding claims,
**characterized in that**
on the outside in the area of its first end, the plug sleeve (6) comprises means (14) for mechanically fixing further insulated arresters (8) and/or potential connections.

4. Device according to claim 1,
**characterized in that**
the second arch section (52) has a convex area resting against the field control layer, and comprises a concave area receiving a molded spring, a garter spring or an elastic ring (15).

## Revendications

1. Dispositif de mise en contact d'une couche à commande de champ d'un conducteur de descente isolé (8) dans la protection extérieure antifoudre, dans lequel
le conducteur de descente isolé (8) est guidé à l'intérieur d'un corps de soutien ou d'un tube de soutien (1) à distance de celui-ci au moins sur un tronçon de longueur,
comportant en outre un élément de raccordement conducteur (5) qui est connecté d'une part à la couche à commande de champ et d'autre part à une compensation de potentiel, et l'élément de raccordement (5) se trouve dans l'espace d'écartement entre le conducteur de descente isolé (8) et l'intérieur du corps de soutien ou du tube de soutien (1),
**caractérisé en ce que**
l'élément de raccordement (5) est susceptible d'être introduit dans cet espace d'écartement, il est réalisé d'un seul tenant et il comprend plusieurs bras ou doigts soumis à une précontrainte mécanique ou à l'effort d'un ressort et venant en appui contre la surface de la couche à commande de champ du conducteur de descente isolé (8),
il est prévu en outre une douille d'enfichage (6) dont la première extrémité reçoit le corps de soutien ou le tube de soutien (1) et dont la seconde extrémité reçoit un tube de fixation (7), une jambe de soutien ou des moyens analogues,
et le corps de soutien ou le tube de soutien (1) est réalisé non conducteur, et le tube de fixation ou la jambe de soutien (7) ainsi que la douille d'enfichage sont réalisés conducteurs,
l'élément de raccordement (5) possède une multitude de bras élastiques en forme de pattes d'araignée qui s'étendent radialement en partant d'un centre et qui vont en direction longitudinale de l'élément de raccordement (5),
une première extrémité respective des bras élastiques présente un tracé sensiblement en forme d'arc double ou en forme de S,
il existe un premier tronçon d'arc respectif (51), et lorsque le conducteur de descente isolé (8) est introduit, un second tronçon d'arc respectif (52) vient en appui avec la couche à commande de champ,
une seconde extrémité respective des bras élastiques s'étend sensiblement en ligne droite en direction longitudinale et vient en appui, par un tronçon (55), avec le corps de soutien ou le tube de soutien (1),
et la seconde extrémité respective (54) des bras élastiques se termine par un coudage (56) qui est susceptible d'être mis en contact avec la douille d'enfichage (6 ; 61).

2. Dispositif selon la revendication 1,
**caractérisé en ce que**
les bras ou doigts sont réalisés de telle sorte que le conducteur de descente isolé (8) est guidé de façon centrée à l'intérieur du corps de soutien ou du tube de soutien (1).

3. Dispositif selon l'une des revendications précédentes,
**caractérisé en ce que**
au niveau de sa première extrémité, la douille d'enfichage (6) présente du côté extérieur des moyens (14) pour la fixation mécanique d'autres conducteurs de descente isolés (8) et/ou de bornes de raccordement au potentiel.

4. Dispositif selon l'une la revendication 1,
**caractérisé en ce que**
le second tronçon d'arc (52) possède une zone convexe qui prend appui contre la couche à commande de champ, et une zone concave qui reçoit un ressort façonné, un ressort à boudin ou un anneau élastique (15).
